# EUROPÄISCHE PATENTSCHRIFT

(11) **EP 1 621 600 B1**
(45) Veröffentlichungstag und Bekanntmachung des Hinweises auf die Patenterteilung: **17.11.2010**
(21) Anmeldenummer: 05014590.3
(22) Anmeldetag: 06.07.2005
(51) Int. Cl.: C10L 1/198, C10L 1/222, C10L 1/24, C09K 3/16

(54) **Mineralöle mit verbesserter Leitfähigkeit und Kältefliessfähigkeit**
Mineral oils having improved conductivity and cold flow properties
Huiles minérales ayant des caractéristiques de conductivité et d'écoulement à froid améliorées

(30) Priorität: 20.07.2004 DE 102004035157
(43) Veröffentlichungstag der Anmeldung: 01.02.2006
(73) Patentinhaber: Clariant Produkte (Deutschland) GmbH, 65929 Frankfurt am Main (DE)
(72) Erfinder: Krull, Matthias, Dr., 55296 Harxheim (DE); Cohrs, Carsten, Dr., 84489 Burghausen (DE); Freundl, Hildegard, 84508 Burgkirchen (DE); Lorenz, Stefan, 65929 Frankfurt am Main (DE)

(56) Entgegenhaltungen:
- EP-A1- 1 134 268
- EP-A1- 1 502 938
- EP-A2- 0 311 452
- DE-A1- 19 622 052
- US-A- 3 850 587
- US-A- 3 917 466
- US-A- 4 356 002

## Beschreibung

Der Gehalt von Mineralöldestillaten an schwefelhaltigen Verbindungen und Aromaten muss im Zuge der sich verschärfenden Umweltgesetzgebung immer weiter abgesenkt werden. Bei den zur Herstellung spezifikationsgerechter Mineralölqualitäten eingesetzten Raffinerieprozessen werden gleichzeitig aber auch andere polare sowie aromatische Verbindungen entfernt. Als Nebeneffekt wird dadurch die elektrische Leitfähigkeit dieser Mitteldestillate stark abgesenkt. Dadurch können elektrostatische Aufladungen, wie sie insbesondere unter hohen Fließgeschwindigkeiten, beispielsweise beim Umpumpen in Leitungen und Filtern in der Raffinerie, in der Distributionskette wie auch beim Verbraucher auftreten, nicht ausgeglichen werden. Derartige Potentialdifferenzen zwischen dem Öl und seiner Umgebung bergen aber das Risiko der Funkenentladung, die zur Selbstentzündung bzw. Explosion der leichtentzündlichen Flüssigkeiten führen kann. Daher werden solchen Ölen mit geringer elektrischer Leitfähigkeit Additive zugesetzt, die die Leitfähigkeit erhöhen und den Potentialausgleich zwischen dem Öl und seiner Umgebung erleichtern.

Eine für vielfältige Zwecke in Mineralölen eingesetzte Verbindungsklasse sind Alkylphenolharze und deren Derivate, die durch Kondensation von Alkylphenolen mit Aldehyden unter sauren bzw. basischen Bedingungen hergestellt werden können. Beispielsweise werden Alkylphenolharze als Kaltfließverbesserer, Korrosionsinhibitoren sowie Asphaltendispergatoren und alkoxilierte Alkylphenolharze als Demulgatoren in Rohölen und Mitteldestillaten eingesetzt. Des Weiteren werden Alkylphenolharze als Stabilisatoren für Jet-fuel eingesetzt. Die Wirkung der bekannten Harze und der sie enthaltenden Additivsysteme ist aber insbesondere in vielen schwefelarmen bzw. schwefelfreien Ölen noch nicht befriedigend.

GB-A-2 305 437 und GB-A-2 308 129 offenbaren Alkylphenol-Formaldehydharze als Pour Point Depressants für wachshaltige Flüssigkeiten wie Diesel, Schmieröl, Hydrauliköl, Rohöle. Die Kondensation der Alkylphenole mit Formaldehyd im Verhältnis 2:1 bis 1:1,5 kann in Gegenwart saurer Katalysatoren wie Schwefelsäure, Sulfonsäuren oder Carbonsäuren durchgeführt werden. Das Harz kann anschließend bei Bedarf mit NaOH behandelt werden, um den sauren Katalysator in das Natriumsalz zu überführen und beispielsweise durch Filtration abzutrennen. In den Beispielen wird mit konzentrierter Schwefelsäure gearbeitet, die nach der Kondensation als Natriumsalz abfiltriert wird.

EP-A-0 857 776 offenbart die Verwendung von Alkylphenolharzen in Kombination mit Ethylencopolymeren und stickstoffhaltigen Paraffindispergatoren zur Verbesserung der Kälteeigenschaften von Mitteldestillaten. Die Kondensation der Harze kann dabei unter Katalyse durch anorganische oder organische Säuren erfolgen, die gegebenenfalls nach nicht weiter spezifizierter Neutralisation im Produkt verbleiben. In den Beispielen erfolgt die Kondensation der Harze unter Katalyse durch Alkylbenzolsulfonsäure, die anschließend mit KOH bzw. NaOH neutralisiert wird.

EP-A-1 088 045 offenbart, dass Alkylphenolharze mit Aminen kombiniert werden können. Gemäß den Beispielen handelt es sich dabei um Salze der Alkylphenolharze, bei denen knapp die Hälfte der phenolischen OH-Gruppen neutralisiert werden.

EP-A-0 381 966 offenbart ein Verfahren zur Herstellung von Novolaken durch Kondensation von Phenolen mit Aldehyden unter azeotropem Auskreisen von Wasser. Als geeignete Katalysatoren werden starke Mineralsäuren, insbesondere Schwefelsäure und ihre sauren Derivate, genannt. Diese können vor der Aufarbeitung des Reaktionsgemischs neutralisiert werden, vorzugsweise mit Metallhydroxiden oder Aminen. In den Beispielen wird durchweg mit Schwefelsäure katalysiert, die anschließend mit Natronlauge neutralisiert wird.

EP-A-0 311 452 offenbart Alkylphenol-Formaldehyd-Kondensate als Kälteadditive für Brennstoffe und Schmieröle. Als Katalysator wird p-Toluolsulfonsäure verwendet, die als solche im Harz verbleibt.

US-A-3 917 466 beschreibt antistatisch wirkende Additivzusammensetzungen für Kohlenwasserstoffe, die Olefin-Schwefeldioxid-Copolymere und beispielsweise Salze aus Aminen und öllöslichen organischen Sulfonsäuren enthalten.

US-A-4 356 002 offenbart die Verwendung von oberflächenaktiven Substanzen, hierunter als Demulgatoren bekannte oxalkylierte Phenol-Aldehyd-Harze, als Antistatik-Additive für Kraftstoffe, wobei diese die Wirkung weiterer Antistatik-Additive synergistisch verstärken können.

Als Katalysatoren für die Kondensationsreaktionen von Alkylphenol und Aldehyd sind neben Carbonsäuren wie Essigsäure und Oxalsäure insbesondere starke Mineralsäuren wie Salzsäure, Phosphorsäure und Schwefelsäure sowie Sulfonsäuren gebräuchliche Katalysatoren. Üblicherweise verbleiben diese nach Beendigung der Reaktion als solche oder in neutralisierter Form im Produkt.

Aus dem Stand der Technik ist bekannt, den für die Kondensation des Alkylphenolharzes eingesetzten Katalysator mit einer Base zu neutralisieren. In der Praxis werden dazu üblicherweise Basen wie Natronlauge oder Kalilauge eingesetzt, die zur Bildung von Natrium- bzw. Kaliumsalzen dieser starken Säuren führen. Für den Einsatz als Brennstoffadditive sind derartige Salze jedoch unerwünscht, da sie aus dem Öl in kristalliner Form ausfallen und Leitungs- bzw. Filterverstopfungen verursachen können sowie bei der Verbrennung zu unerwünschten Rückständen (Asche) führen.

Aufgabe vorliegender Erfindung war es somit, ein Additiv zur Verbesserung sowohl der Leitfähigkeit als auch der Kälteeigenschaften von Mineralöldestillaten zu finden.

Überraschenderweise wurde nun gefunden, dass Mineralöle, die Alkylphenolharze enthalten durch Zugabe geringer Mengen öllöslicher Ammoniumsalze organischer Sulfonsäuren deutlich in ihrer elektrischen Leitfähigkeit verbessert werden können. Der mit Ammoniumsalzen erzielbare Effekt ist dabei deutlich ausgeprägter als bei entsprechenden Alkalisalzen. Die so additivierten Öle zeigen eine stark erhöhte Leitfähigkeit und sind somit wesentlich sicherer zu handhaben.

Weiterhin wurde gefunden, dass durch Zugabe geringer Mengen öllöslicher Ammoniumsalze organischer Sulfonsäuren gleichzeitig die Wirksamkeit der Alkylphenol-Aldehydharze als Kälteadditive, insbesondere als Paraffindispergatoren, gesteigert wird und zudem auch nach längerer Lagerung des Alkylphenol-Aldehydharzes erhalten bleibt. Vermutlich beruht dies auf einer Unterdrückung der Zersetzung der Alkylphenolharze zu intensiv gefärbten Phenoxy- und Phenoxonium-Radikalen.

Gegenstand der Erfindung sind somit Mineralöldestillate mit einem Schwefelgehalt von 350 ppm oder weniger, die 5 bis 500 ppm mindestens eines Alkylphenol-Aldehydharzes (Bestandteil I) und 0,001 bis 10 ppm mindestens eines öllöslichen, organischen Sulfonsäure-Ammoniumsalzes (Bestandteil II) enthalten.

Ein weiterer Gegenstand der Erfindung sind Zusammensetzungen enthaltend mindestens ein Alkylphenolharz und, bezogen auf das Alkylphenolharz, 0,005 bis 10 Gew.-% mindestens eines organischen Sulfonsäure-Ammoniumsalzes.

Ein weiterer Gegenstand der Erfindung ist die Verwendung von Zusammensetzungen, die mindestens ein Alkylphenol-Aldehydharz und, bezogen auf dieses Alkylphenol-Aldehydharz oder diese Alkylphenol-Aldehydharze, 0,005 bis 10 Gew.-% mindestens eines öllöslichen, organischen Sulfonsäure-Ammoniumsalzes enthalten, zur Verbesserung der elektrischen Leitfähigkeit schwefelarmer Mitteldestillate.

Ein weiterer Gegenstand der Erfindung ist die Verwendung von Zusammensetzungen, die mindestens ein Alkylphenol-Aldehydharz und, bezogen auf dieses Alkylphenol-Aldehydharz oder diese Alkylphenol-Aldehydharze, 0,005 bis 10 Gew.-% mindestens eines öllöslichen, organischen Sulfonsäure-Ammoniumsalzes enthalten, zur Verbesserung der Kaltfließfähigkeit von Mitteldestillaten.

Die erfindungsgemäßen Sulfonsäure-Ammoniumsalze können dem Mineralöldestillat bzw. dem Alkylphenol-Aldehydharz als solches zugesetzt werden. Bevorzugt werden sie durch Umsetzung der zur sauren Kondensation des Alkylphenol-Aldehydharzes als Katalysator eingesetzten Sulfonsäure mit den entsprechenden Aminen in Gegenwart der Alkylphenol-Aldehydharze hergestellt. Alternativ können sie durch Umsetzung eines zur basischen Kondensation des Alkylphenol-Aldehydharzes als Katalysator eingesetzten Amins mit entsprechenden Sulfonsäuren in Gegenwart der Alkylphenol-Aldehydharze hergestellt werden.

Zur Herstellung der Sulfonsäure-Ammoniumsalze geeignete Sulfonsäuren sind alle öllöslichen Verbindungen, die mindestens eine Sulfonsäuregruppe und mindestens einen gesättigten oder ungesättigten, linearen, verzweigten und/oder cyclischen Kohlenwasserstoffrest mit 1 bis 40 C-Atomen und bevorzugt mit 3 bis 24 C-Atomen enthalten. Besonders bevorzugt sind aromatische Sulfonsäuren, speziell alkylaromatische Monosulfonsäuren mit einem oder mehreren C₁-C₂₈-Alkylresten und insbesondere solche mit C₃-C₂₂-Alkylresten. Bevorzugt tragen die alkylaromatischen Sulfonsäuren ein oder zwei, insbesondere einen Alkylrest. Die zugrunde liegenden Arylgruppe sind bevorzugt mono- und bizyklisch, insbesondere monozyklisch. In einer bevorzugten Ausführungsform tragen die Arylgruppen keine Carboxylgruppen und speziell tragen sie nur Sulfonsäure- und Alkylgruppen. Geeignete Beispiele sind Methansulfonsäure, Butansulfonsäure, Benzolsulfonsäure, p-Toluolsulfonsäure, Xylolsulfonsäure, 2-Mesitylensulfonsäure, 4-Ethylbenzolsulfonsäure, Isopropylbenzolsulfonsäure, 4-Butylbenzolsulfonsäure, 4-Octylbenzolsulfonsäure; Dodecylbenzolsulfonsäure, Didodecylbenzolsulfonsäure, Naphthalinsulfonsäure. Auch Mischungen dieser Sulfonsäuren sind geeignet. Öllöslich bedeutet hier, dass die genannten Verbindungen mindestens zu 1 Gew.-% in aromatischen Lösemitteln wie beispielsweise Toluol löslich sind.

Geeignete Amine sind öllösliche, basische Stickstoffverbindungen der allgemeinen Formel

NR1R²R³ und/oder NR¹R² - [(CH2)ₙ - NR²]ₘR³

wobei R¹ für einen Alkylrest mit 1 bis 24 C-Atomen oder einen Alkenylrest mit 2 bis 24 C-Atomen steht, R² und R³ unabhängig voneinander für H oder R¹, n für eine Zahl von 2 bis 6, bevorzugt für 2 oder 3 und m für eine Zahl von 1 bis 6, bevorzugt für 1 bis 4 stehen. Die Alkyl- und Alkenylreste können unabhängig voneinander linear, verzweigt oder cyclisch sein. Die Amine umfassen somit primäre, sekundäre und tertiäre Amine, deren Alkylreste gleich oder verschieden sein können. Die Alkyl- bzw. Alkenylreste können auch funktionelle Gruppen tragen, so lange diese die Öllöslichkeit der daraus abgeleiteten Ammoniumsalze nicht beeinträchtigen. Die Amine können ein oder auch mehrere Stickstoffatome wie beispielsweise zwei, drei, vier oder mehr Stickstoffatome tragen. Bevorzugt handelt es sich um Mono- und Diamine. Bevorzugt tragen diese zwei oder drei, insbesondere drei Alkylreste.

Geeignete primäre Monoamine sind beispielsweise Methylamin, Ethylamin, Propylamin, Butylamin, Pentylamin, Hexylamin, Cyclohexylamin, Octylamin, 2-Ethylhexylamin, Decylamin, Dodecylamin, Tetradecylamin, Hexadecylamin, Octadecylamin, Ethanolamin und deren Mischungen wie Cocosfettamin, Talgfettamin.

Geeignete sekundäre Amine sind beispielsweise Dimethylamin, Diethylamin, Dipropylamin, Dibutylamin, Dipentylamin, Dihexylamin, Dioctylamin, Di(2-ethylhexyl)amin, Didodecylamin, Ditetradecylamin, Dihexadecylamin, Dioctadecylamin, Methylethylamin, Diethanolamin und deren Mischungen wie Dicocosfettamin, Ditalgfettamin.

Geeignete tertiäre Monoamine sind beispielsweise Trimethylamin, Triethylamin, Tripropylamin, Tributylamin, Tripentylamin, Trihexylamin, Trioctylamin, Tri(2-ethylhexyl)amin, Tri-dodecylamin, Tri-tetradecylamin und deren Mischungen wie beispielsweise Tricocosfettamin, Tritalgfettamin, N-Methyl-N,N-Dicocosfettamin, N,N-Dimethyl-N-stearylamin, N,N-Dimethyl-N-cocosfettamin.

Geeignete Polyamine sind beispielsweise N-Alkylpropylendiamine und N,N-Dialkyl-propylendiamine mit C₁-C₂₄-Alkylresten wie N-Cocosfettalkylpropylendiamin, N-Talgfettpropylendiamin und Dimethylaminopropylamin.

Geeignete Amine sind auch solche, in denen der Stickstoff Bestandteil eines mono- oder polycyclischen aliphatischen Ringsystems mit 4 bis 40 C-Atomen, bevorzugt mit 5 bis 20 C-Atomen und insbesondere mit 6 bis 12C-Atomen ist. Das Ringsystem kann ein, zwei, drei, vier oder mehr Stickstoffatome enthalten. Es kann ein, zwei oder drei Ringe enthalten. Besonders bevorzugt sind monocyclische Amine mit einem Stickstoffatom sowie bicyclische Systeme mit zwei Stickstoffatomen. Insbesondere handelt es sich bei einem Stickstoffatom um ein tertiäres Brückenatom zwischen zwei Ringen. Geeignete Beispiele hierfür sind Pyrrolidin, Piperidin, Piperazin, Diazabicycloundecen (DBU) und Diazabicyclononen (DBN), Diazabicyclooctan (DABCO), Diazabicycloheptan und Urotropin (Hexamethylentetramin).

Die erfindungsgemäßen Sulfonsäure-Ammoniumsalze werden durch Umsetzung der Sulfonsäuren mit 0,8 bis 10 Mol Amin, bevorzugt 0,9 bis 5 Mol Amin, besonders bevorzugt 0,95 bis 2 Mol Amin, wie beispielsweise etwa equimolar, hergestellt. Dabei wird insbesondere bei mehrbasischen Sulfonsäuren und/oder Aminen die Molzahl der insgesamt umgesetzten Säure- und Aminogruppen betrachtet. Die erfindungsgemäßen Additive und die sie enthaltenden Mitteldestillate können demzufolge bezogen auf die Sulfonsäure auch mehr als equimolare Mengen an Aminen enthalten.

Bevorzugt enthalten die erfindungsgemäßen Zusammensetzungen 0,01 bis 5 Gew.-%, besonders bevorzugt 0,05 bis 5 Gew.-%, wie beispielsweise 0,1 bis 4 Gew.-% mindestens eines Sulfonsäuresalzes, bezogen auf das Alkylphenolharz. In ihrer elektrischen Leitfähigkeit verbesserte Mineralöldestillate besitzen eine elektrische Leitfähigkeit von bevorzugt mindestens 50 pS/m.

Alkylphenol-Aldehyd-Harze sind prinzipiell bekannt und beispielsweise im Römpp Chemie Lexikon, 9. Auflage, Thieme Verlag 1988-92, Band 4, S. 3351 ff. beschrieben. Erfindungsgemäß geeignet sind insbesondere solche Alkylphenol-Aldehydharze, die sich von Alkylphenolen mit ein oder zwei Alkylresten in ortho- und/oder para-Position zur OH-Gruppe ableiten. Besonders bevorzugt als Ausgangsmaterialien sind Alkylphenole, die am Aromaten mindestens zwei zur Kondensation mit Aldehyden befähigte Wasserstoffatome tragen und insbesondere monoalkylierte Phenole, deren Alkylrest sich in der para-Stellung befindet. Die Alkylreste (darunter werden für den Bestandteil I generell Kohlenwasserstoffreste gemäß nachstehender Definition verstanden) können bei den im erfindungsgemäßen Verfahren einsetzbaren Alkylphenol-Aldehyd-Harzen gleich oder verschieden sein, sie können gesättigt oder ungesättigt sein und besitzen 1 - 200, vorzugsweise 1 - 20, insbesondere 4 - 12 Kohlenstoffatome; bevorzugt handelt es sich um n-, iso- und tert.-Butyl-, n- und iso-Pentyl-, n- und iso-Hexyl-, n- und iso-Octyl-, n- und iso-Nonyl-, n- und iso-Decyl-, n- und iso-Dodecyl-, Tetradecyl-, Hexadecyl-, Octadecyl-, Tripropenyl-, Tetrapropenyl-, Poly(propenyl)- und Poly(isobutenyl)reste.

Geeignete Aldehyde für die Alkylphenol-Aldehydharze sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd und insbesondere Formalin.

Das Molekulargewicht der Alkylphenol-Aldehyd-Harze beträgt 400 - 20.000, bevorzugt 400 - 5000 g/mol. Voraussetzung ist hierbei, dass die Alkylphenol-Aldehydharze zumindest in anwendungsrelevanten Konzentrationen von 0,001 bis 1 Gew.-% öllöslich sind.

Im Rahmen der Erfindung handelt es sich dabei um Alkylphenol-Formaldehydharze, die Oligo- oder Polymere mit einer repetitiven Struktureinheit der Formel 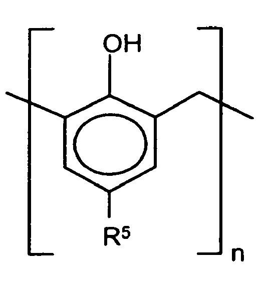 worin R⁵ für C₁-C₂₀₀-Alkyl oder -Alkenyl und n für eine Zahl von 2 bis 100 steht, enthalten. Bevorzugt steht R⁵ für C₄-C₂₀-Alkyl oder -Alkenyl und insbesondere für C₆-C₁₆-Alkyl oder -Alkenyl. Bevorzugt steht n für eine Zahl von 2 bis 50 und speziell für eine Zahl von 3 bis 25 wie beispielsweise eine Zahl von 5 bis 15.

Für den Einsatz in Mitteldestillaten wie Diesel und Heizöl besonders bevorzugt sind Alkylphenol-Aldehydharze mit C₂-C₄₀-Alkylresten des Alkylphenols, bevorzugt mit C₄-C₂₀-Alkylresten wie beispielsweise C₆-C₁₂-Alkylresten. Die Alkylreste können linear oder verzweigt sein, bevorzugt sind sie linear. Besonders geeignete Alkylphenol-Aldehydharze leiten sich von linearen Alkylresten mit 8 und 9C-Atomen ab. Das mittels GPC bestimmte mittlere Molekulargewicht liegt bevorzugt zwischen 700 und 20.000, insbesondere zwischen 800 und 10.000 wie beispielsweise zwischen 1.000 und 2.500 g/Mol.

Für den Einsatz in Benzin und Jet-Fuel besonders bevorzugt sind Alkylphenol-Aldehydharze, deren Alkylreste 4 bis 200 C-Atome, bevorzugt 10 bis 180 C-Atome tragen und sich von Oligomeren oder Polymeren von Olefinen mit 2 bis 6-C-Atomen wie beispielsweise von Poly(isobutylen) ableiten. Sie sind somit bevorzugt verzweigt. Der Polymerisationsgrad (n) liegt hier bevorzugt zwischen 2 und 20, bevorzugt zwischen 3 und 10 Alkylphenoleinheiten.

Diese Alkylphenol-Aldehydharze sind nach bekannten Verfahren zugänglich, z.B. durch Kondensation der entsprechenden Alkylphenole mit Formaldehyd, d.h. mit 0,5 bis 1,5 Mol, bevorzugt 0,8 bis 1,2 Mol Formaldehyd pro Mol Alkylphenol. Die Kondensation kann lösemittelfrei erfolgen, bevorzugt erfolgt sie jedoch in Gegenwart eines nicht oder nur teilweise wassermischbaren inerten organischen Lösemittels wie Mineralöle, Alkohole, Ether und ähnliches. Besonders bevorzugt sind Lösemittel, die mit Wasser Azeotrope bilden können. Als derartige Lösemittel werden insbesondere Aromaten wie Toluol, Xylol Diethylbenzol und höher siedende kommerzielle Lösemittelgemische wie ® Shellsol AB, und Solvent Naphtha eingesetzt. Die Kondensation erfolgt bevorzugt zwischen 70 und 200°C wie beispielsweise zwischen 90 und 160°C. Sie wird üblicherweise durch 0,05 bis 5 Gew.-% Basen oder Säuren katalysiert. So führt beispielsweise die durch Amine, bevorzugt tertiäre Amine wie beispielsweise Triethylamin katalysierte Kondensation mit nachfolgender Neutralisation mittels organischer Sulfonsäure zu den erfindungsgemäßen Mischungen. Erfindungsgemäß bevorzugt wird die Katalyse durch organische Sulfonsäuren, die nach Abschluss der Kondensation mit Aminen zu den erfindungsgemäßen öllöslichen Sulfonsäure-Ammoniumsalzen umgesetzt werden.

Die erfindungsgemäßen Additive erhöhen die Leitfähigkeit von Mineralölen wie Benzin, Kerosin, Jet-Fuel, Diesel und Heizöl mit niedrigem Schwefelgehalt von weniger als 500 ppm, insbesondere weniger als 50 ppm wie beispielsweise weniger als 10 oder weniger als 5 ppm. Gleichzeitig verbessern sie die Kälteeigenschaften insbesondere von Mitteldestillaten wie Kerosin, Jet-Fuel, Diesel und Heizöl.

Die erfindungsgemäßen Additive können Mitteldestillaten zur Verbesserung der Kaltfließfähigkeit auch in Kombination mit weiteren Additiven wie beispielsweise Ethylen-Copolymeren, polaren Stickstoffverbindungen, Kammpolymeren, Polyoxyalkylenverbindungen und/oder Olefincopolymeren zugesetzt werden.

Die vorliegende Erfindung stellt somit ein neues Additivpaket zur Verfügung, das gleichzeitig die Kälteeigenschaften und die antistatischen Eigenschaften von schwefelarmen Mineralölen verbessert.

Die erfindungsgemäßen Additive für Mitteldestillate enthalten so in einer bevorzugten Ausführungsform neben den Bestandteilen I und II noch ein oder mehrere der Komponenten III bis VII. So enthalten sie bevorzugt Copolymere aus Ethylen und olefinisch ungesättigten Verbindungen als Bestandteil III. Als Ethylen-Copolymere eignen sich insbesondere solche, die neben Ethylen 6 bis 21 mol-%, insbesondere 10 bis 18 mol-% Comonomere enthalten. Vorzugsweise haben diese Copolymere Schmelzviskositäten bei 140°C von 20 bis 10.000 mPas, insbesondere von 30 bis 5.000 mPas, speziell von 50 bis 2.000 mPas.

Bei den olefinisch ungesättigten Verbindungen handelt es sich vorzugsweise um Vinylester, Acrylester, Methacrylester, Alkylvinylether und/oder Alkene, wobei die genannten Verbindungen mit Hydroxylgruppen substituiert sein können. Es können ein oder mehrere Comonomere im Polymer enthalten sein.

Bei den Vinylestern handelt es sich vorzugsweise um solche der Formel 1

CH₂=CH-OCOR¹ (1)

worin R¹ C₁ bis C₃₀-Alkyl, vorzugsweise C₄ bis C₁₆-Alkyl, speziell C₆- bis C₁₂-Alkyl bedeutet. In einer weiteren Ausführungsform können die genannten Alkylgruppen mit einer oder mehreren Hydroxylgruppen substituiert sein.

In einer weiteren bevorzugten Ausführungsform steht R¹ für einen verzweigten Alkylrest oder einen Neoalkylrest mit 7 bis 11 Kohlenstoffatomen, insbesondere mit 8, 9 oder 10 Kohlenstoffatomen. Besonders bevorzugte Vinylester leiten sich von sekundären und insbesondere tertiären Carbonsäuren ab, deren Verzweigung sich in alpha-Position zur Carbonylgruppe befindet. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester.

In einer weiteren bevorzugten Ausführungsform enthalten diese Ethylen-Copolymere Vinylacetat und mindestens einen weiteren Vinylester der Formel 1 worin R¹ für C₄ bis C₃₀-Alkyl, vorzugsweise C₄ bis C₁₆-Alkyl, speziell C₆- bis C₁₂-Alkyl steht.

Bei den Acrylestern handelt es sich vorzugsweise um solche der Formel 2

CH₂=CR²-COOR³ (2)

worin R² Wasserstoff oder Methyl und R³ C₁- bis C₃₀-Alkyl, vorzugsweise C₄- bis C₁₆₋Alkyl, speziell C₆- bis C₁₂-Alkyl bedeutet. Geeignete Acrylester umfassen z.B. Methyl(meth)acrylat, Ethyl(meth)acrylat, Propyl(meth)acrylat, n- und isoButyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere. In einer weiteren Ausführungsform können die genannten Alkylgruppen mit einer oder mehreren Hydroxylgruppen substituiert sein. Ein Beispiel für einen solchen Acrylester ist Hydroxyethylmethacrylat.

Bei den Alkylvinylethern handelt es sich vorzugsweise um Verbindungen der Formel 3

CH₂=CH-OR⁴ (3)

worin R⁴ C₁- bis C₃₀-Alkyl, vorzugsweise C₄- bis C₁₆-Alkyl, speziell C₆- bis C₁₂-Alkyl bedeutet. Beispielsweise seien genannt Methylvinylether, Ethylvinylether, isoButylvinylether. In einer weiteren Ausführungsform können die genannten Alkylgruppen mit einer oder mehreren Hydroxylgruppen substituiert sein.

Bei den Alkenen handelt es sich vorzugsweise um einfache ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobutylen, Penten, Hexen, 4-Methylpenten, Octen, Diisobutylen sowie Norbornen und seine Derivate wie Methylnorbornen und Vinylnorbornen. In einer weiteren Ausführungsform können die genannten Alkylgruppen mit einer oder mehreren Hydroxylgruppen substituiert sein.

Besonders bevorzugte Terpolymerisate enthalten außer Ethylen 0,1 bis 12 mol-%, insbesondere 0,2 bis 5 mol-% des Neononansäurevinylesters bzw. des Neodecansäurevinylesters und 3,5 bis 20 mol-%, insbesondere 8 bis 15 mol-% Vinylacetat, wobei der gesamte Comonomergehalt zwischen 8 und 21 mol-%, bevorzugt zwischen 12 und 18 mol-% liegt. Weitere besonders bevorzugte Copolymere enthalten neben Ethylen und 8 bis 18 mol-% Vinylestern noch 0,5 bis 10 mol-% Olefine wie Propen, Buten, Isobutylen, Hexen, 4-Methylpenten, Octen, Diisobutylen und/oder Norbornen.

Bevorzugt werden Mischungen aus zwei oder mehr der oben genannten Ethylen-Copolymere eingesetzt. Besonders bevorzugt unterscheiden sich die den Mischungen zu Grunde liegenden Polymere in mindestens einem Charakteristikum. Beispielsweise können sie unterschiedliche Comonomere enthalten, unterschiedliche Comonomergehalte, Molekulargewichte und/oder Verzweigungsgrade aufweisen.

Das Mischungsverhältnis zwischen den erfindungsgemäßen Additiven und Ethylencopolymeren als Bestandteil III kann je nach Anwendungsfall in weiten Grenzen variieren, wobei die Ethylencopolymere III oftmals den größeren Anteil darstellen. Bevorzugt enthalten derartige Additivmischungen 2 bis 70 Gew.-%, bevorzugt 5 bis 50 Gew.-% der erfindungsgemäßen Additivkombination aus I und II sowie 30 bis 98 Gew.-%, bevorzugt 50 bis 95 Gew.-% Ethylencopolymere.

Bei den als weitere Komponente erfindungsgemäß geeigneten öllöslichen polaren Stickstoffverbindungen (Bestandteil IV) handelt es sich vorzugsweise um Umsetzungsprodukte von Fettaminen mit Verbindungen, die eine Acylgruppe enthalten. Bei den bevorzugten Aminen handelt es sich um Verbindungen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂₋Cycloalkyl oder C₆-C₃₀-Aryl, und n = 2, 3 oder 4 bedeuten, und Y und Z unabhängig voneinander H, C₁-C₃₀-Alkyl oder -(A-O)ₓ bedeuten. Die Alkyl- und Alkenylreste können linear oder verzweigt sein und bis zu zwei Doppelbindungen enthalten. Bevorzugt sind sie linear und weitgehend gesättigt, das heißt sie haben Jodzahlen von weniger als 75 gl₂/g, bevorzugt weniger als 60 gl₂/g und insbesondere zwischen 1 und 10 gl₂/g. Besonders bevorzugt sind sekundäre Fettamine, in denen zwei der Gruppen R⁶, R⁷ und R⁸ für C₈-C₃₆-Alkyl, C₆-C₃₆-Cycloalkyl, C₈-C₃₆-Alkenyl, insbesondere für C₁₂-C₂₄-Alkyl, C₁₂-C₂₄-Alkenyl oder Cyclohexyl stehen. Geeignete Fettamine sind beispielsweise Octylamin, Decylamin, Dodecylamin, Tetradecylamin, Hexadecylamin, Octadecylamin, Eicosylamin, Behenylamin, Didecylamin, Didodecylamin, Ditetradecylamin, Dihexadecylamin, Dioctadecylamin, Dieicosylamin, Dibehenylamin sowie deren Mischungen. Speziell enthalten die Amine Kettenschnitte auf Basis natürlicher Rohstoffe wie z.B. Cocosfettamin, Talgfettamin, hydriertes Talgfettamin, Dicocosfettamin, Ditalgfettamin und Di(hydriertes Talgfettamin). Besonders bevorzugte Aminderivate sind Aminsalze, Imide und/oder Amide wie beispielsweise Amid-Ammoniumsalze sekundärer Fettamine, insbesondere von Dicocosfettamin, Ditalgfettamin und Distearylamin.

Unter Acylgruppe wird hier eine funktionelle Gruppe folgender Formel verstanden:

>C=O

Für die Umsetzung mit Aminen geeignete Carbonylverbindungen sind sowohl niedermolekulare wie auch polymere Verbindungen mit einer oder mehreren Carboxylgruppen. Bei den niedermolekularen Carbonylverbindungen werden solche mit 2, 3 oder 4 Carbonylgruppen bevorzugt. Sie können auch Heteroatome wie Sauerstoff, Schwefel und Stickstoff enthalten. Geeignete Carbonsäuren sind beispielsweise Malein-, Fumar-, Croton-, Itacon-, Bernsteinsäure, C₁-C₄₀₋Alkenylbernsteinsäure, Adipin-, Glutar-, Sebacin-, und Malonsäure sowie Benzoe-, Phthal-, Trimellit- und Pyromellitsäure, Nitrilotriessigsäure, Ethylendiamintetraessigsäure und deren reaktive Derivate wie beispielsweise Ester, Anhydride und Säurehalogenide. Als polymere Carbonylverbindungen haben sich insbesondere Copolymere ethylenisch ungesättigter Säuren wie beispielsweise Acrylsäure, Methacrylsäure, Maleinsäure, Fumarsäure und Itaconsäure erwiesen, besonders bevorzugt sind Copolymere des Maleinsäureanhydrids. Als Comonomere sind solche geeignet, die dem Copolymer Öllöslichkeit verleihen. Unter öllöslich wird hier verstanden, dass sich das Copolymer nach Umsetzung mit dem Fettamin in praxisrelevanten Dosierraten rückstandsfrei im zu additivierenden Mitteldestillat löst. Geeignete Comonomere sind beispielsweise Olefine, Alkylester der Acrylsäure und Methacrylsäure, Alkylvinylester, Alkylvinylether mit 2 bis 75, bevorzugt 4 bis 40 und insbesondere 8 bis 20 Kohlenstoffatomen im Alkylrest. Bei Olefinen ist hier der an die Doppelbindung gebundene Alkylrest equivalent. Die Molekulargewichte der polymeren Carbonylverbindungen liegen bevorzugt zwischen 400 und 20.000, besonders bevorzugt zwischen 500 und 10.000 wie beispielsweise zwischen 1.000 und 5.000.

Besonders bewährt haben sich öllösliche polare Stickstoffverbindungen, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Des gleichen sind Amide und Ammoniumsalze von Aminoalkylenpolycarbonsäuren wie Nitrilotriessigsäure oder Ethylendiamintetraessigsäure mit sekundären Aminen als öllöslichen polaren Stickstoffverbindungen geeignet (vgl. EP 0 398 101). Andere öllöslichen polaren Stickstoffverbindungen sind Copolymere des Maleinsäureanhydrids und α,β-ungesättigter Verbindungen, die gegebenenfalls mit primären Monoalkylaminen und/oder aliphatischen Alkoholen umgesetzt werden können (vgl. EP-A-0 154 177, EP 0 777 712), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxyalkylenethern niederer ungesättigter Alkohole.

Das Mischungsverhältnis zwischen den erfindungsgemäßen Additiven und öllöslichen polaren Stickstoffverbindungen als Bestandteil IV kann je nach Anwendungsfall variieren. Bevorzugt enthalten derartige Additivmischungen 10 bis 90 Gew.-%, bevorzugt 20 bis 80 Gew.-% der erfindungsgemäßen Additivkombination aus I und II sowie 10 bis 90 Gew.-%, bevorzugt 20 bis 80 Gew.-% öllösliche polare Stickstoffverbindungen.

Als weitere Komponente geeignete Kammpolymere (Bestandteil V) können beispielsweise durch die Formel 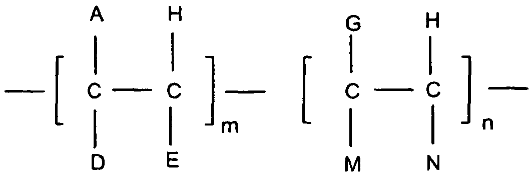 beschrieben werden. Darin bedeuten
- A: R', COOR', OCOR', R"-COOR', OR';
- D: H, CH₃, A oder R";
- E: H, A;
- G: H, R", R"-COOR', einen Arylrest oder einen heterocyclischen Rest;
- M: H, COOR", OCOR", OR", COOH;
- N: H, R", COOR", OCOR, einen Arylrest;
- R': eine Kohlenwasserstoffkette mit 8 bis 50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Als weitere Komponente geeignete Polyoxyalkylenverbindungen (Bestandteil VI) sind beispielsweise Ester, Ether und Ether/Ester, die mindestens einen Alkylrest mit 12 bis 30 C-Atomen tragen. Wenn die Alkylgruppen von einer Säure stammen, stammt der Rest von einem mehrwertigen Alkohol; kommen die Alkylreste von einem Fettalkohol, so stammt der Rest der Verbindung von einer Polysäure.

Geeignete Polyole sind Polyethylenglykole, Polypropylenglykole, Polybutylenglykole und deren Mischpolymerisate mit einem Molekulargewicht von ca. 100 bis ca. 5000, vorzugsweise 200 bis 2000. Weiterhin geeignet sind Alkoxylate von Polyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxylate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind zur Umsetzung mit den Polyolen zur Bildung der Esteradditive bevorzugt, wobei besonders bevorzugt C₁₈- bis C₂₄-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-Ethylenglykol-Tribehenat.

Geeignete Olefincopolymere (Bestandteil VII) als weiterer Bestandteil des erfindungsgemäßen Additivs können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von α-Olefinen mit 3 bis 24 C-Atomen ableiten und Molekulargewichte von bis zu 120.000 g/mol aufweisen. Bevorzugte α-Olefine sind Propylen, Buten, Isobuten, n-Hexen, Isohexen, n-Octen, Isoocten, n-Decen, Isodecen. Der Comonomergehalt an Olefinen liegt bevorzugt zwischen 15 und 50 Mol-%, besonders bevorzugt zwischen 20 und 35 mol-% und speziell zwischen 30 und 45 mol-%. Diese Copolymeren können auch geringe Mengen, z.B. bis zu 10 mol-% weiterer Comonomere wie z.B. nicht endständige Olefine oder nicht konjugierte Olefine enthalten. Bevorzugt sind Ethylen-Propylen-Copolymere. Die Olefincopolymere können nach bekannten Methoden hergestellt werden, z.B. mittels Ziegler- oder Metallocen-Katalysatoren.

Weitere geeignete Olefincopolymere sind Blockcopolymere, die Blöcke aus olefinisch ungesättigten, aromatischen Monomeren A und Blöcke aus hydrierten Polyolefinen B enthalten. Besonders geeignet sind Blockcopolymere der Struktur (AB)nA und (AB)m, wobei n eine Zahl zwischen 1 und 10 und m eine Zahl zwischen 2 und 10 ist.

Die Additive können allein oder auch zusammen mit anderen Additiven verwendet werden, z.B. mit anderen Stockpunkterniedrigern oder Entwachsungshilfsmitteln, mit Antioxidantien, Cetanzahlverbesserern, Dehazern, Demulgatoren, Detergenzien, Dispergatoren, Entschäumern, Farbstoffen, Korrosionsinhibitoren, Lubricity-Additiven, Schlamminhibitoren, Odorantien und/oder Zusätzen zur Erniedrigung des Cloud-Points.

Das Mischungsverhältnis zwischen den erfindungsgemäßen Additivkombinationen aus I und II sowie den weiteren Bestandteilen V, VI und VII ist im allgemeinen jeweils zwischen 1:10 und 10:1, bevorzugt zwischen 1: 5 und 5:1.
Die erfindungsgemäßen Additive sind geeignet, die elektrostatischen Eigenschaften sowie die Kaltfließeigenschaften von tierischen, pflanzlichen oder mineralischen Ölen zu verbessern. Insbesondere erhöhen sie die elektrische Leitfähigkeit der additivierten Öle und ermöglichen so eine sichere Handhabung zum Beispiel beim Umpumpen und Verladen. Besonders geeignet sind sie für die Verbesserung der elektrostatischen Eigenschaften von Mineralölen wie Jet-Fuel, Benzin, Kerosin, Diesel und Heizöl, die zwecks Absenkung des Schwefelgehalts einer hydrierenden Raffination unterzogen wurden. Diese Öle enthalten bevorzugt weniger als 350 ppm Schwefel und insbesondere weniger als 100 ppm Schwefel wie beispielsweise weniger als 50 ppm oder 10 ppm Schwefel.

Darüber hinaus dispergieren sie in Mitteldestillaten die unterhalb des Cloud Points ausfallenden Paraffine. Insbesondere sind sie in problematischen Ölen mit niedrigem Aromatengehalt von weniger als 25 Gew.-%, insbesondere weniger als 22 Gew.-% wie beispielsweise weniger als 20 Gew.-% Aromaten und damit geringer Löslichkeit für n-Paraffine den Additiven des Standes der Technik überlegen. Als Mitteldestillat bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Unter aromatischen Verbindungen wird die Summe aus mono-, di- und polyzyklischen aromatischen Verbindungen verstanden, wie sie mittels HPLC gemäß DIN EN 12916 (Ausgabe 2001) bestimmbar ist. Besonders vorteilhaft sind die erfindungsgemäßen Additive in solchen Mitteldestillaten, die weniger als 350 ppm Schwefel, besonders bevorzugt weniger als 100 ppm Schwefel insbesondere weniger als 50 ppm Schwefel und in speziellen Fällen weniger als 10 ppm Schwefel enthalten. Es handelt sich dabei im Allgemeinen um solche Mitteldestillate, die einer hydrierenden Raffination unterworfen wurden, und die daher nur geringe Anteile an polyaromatischen und polaren Verbindungen enthalten. Vorzugsweise handelt es sich um solche Mitteldestillate, die 90 %-Destillationspunkte unter 360°C, insbesondere 350°C und in Spezialfällen unter 340°C aufweisen.

### Beispiele

**Tabelle 1: Charakterisierung der Testöle:**

| Als Testöle wurden aktuelle Öle aus europäischen Raffinerien herangezogen. Die Bestimmung des CFPP-Werts erfolgt gemäß EN 116 und die Bestimmung des Cloud Points gemäß ISO 3015. Die Bestimmung der aromatischen Kohlenwasserstoffgruppen erfolgt gemäß DIN EN 12916 (Ausgabe November 2001) | | | | | | |
|---|---|---|---|---|---|---|
| | | | Testöl 1 | Testöl 2 | Testöl 3 | Testöl 4 |
| Destillation | | | | | | |
| IBP | [°C] | | 161 | 191 | 193 | 173 |
| 20% | [°C] | | 193 | 241 | 229 | 208 |
| 90% | [°C] | | 226 | 330 | 329 | 334 |
| FBP | [°C] | | 247 | 352 | 351 | 359 |
| Cloud Point | [°C] | | -38 | -5,9 | -5,7 | -7,2 |
| CFPP | [°C] | | <-40 | -8 | -9 | -9 |
| Schwefel | | [ppm] | 6 | 172 | 19 | 8 |
| Dichte @15°C | | [g/cm³] | 0,8034 | 0,8335 | 0,8313 | 0,8261 |
| Aromatengehalt | | [Gew.-%] | 18,24 | 21,77 | 18,22 | 18,52 |
| davon mono | | [Gew.-%] | 18,01 | 18,69 | 16,95 | 17,33 |
| di | | [Gew.-%] | 0,23 | 2,88 | 1,19 | 1,06 |
| poly | | [Gew.-%] | - | 0,21 | 0,08 | 0,13 |

Folgende Additive wurden eingesetzt:
(A) Mischungen aus Alkylphenolharzen und Sulfonsäuresalzen
A1) Sauer katalysiertes Nonylphenol-Formaldehydharz (Mw 1300 g/mol) mit 2,4 Gew.-% Dodecylbenzolsulfonsäure-triethanolammoniumsalz
A2) Sauer katalysiertes Nonylphenol-Formaldehydharz (Mw 1300 g/mol) mit 3,5 Gew.-% Dodecylbenzolsulfonsäure-Di(cocosalkyl)ammoniumsalz,
A3) Sauer katalysiertes Nonylphenol-Formaldehydharz (Mw) 1300 g/mol mit 2,1 Gew.-% Dodecylbenzolsulfonsäure-Cyclohexylammoniumsalz,
A4) Sauer katalysiertes Nonylphenol-Formaldehydharz (Mw 1400 g/mol) mit 0,3 Gew.-% Dodecylbenzolsulfonsäure-diethanolammoniumsalz,
A5) Sauer katalysiertes Nonylphenol-Formaldehydharz (Mw 1300 g/mol) mit 2,1 Gew.-% Dodecylbenzolsulfonsäure-triethylammoniumsalz,
A6) Sauer katalysiertes Nonylphenol-Formaldehydharz (Mw 1300 g/mol) mit 2,5 Gew.-% Dodecylbenzolsulfonsäure-tributylammoniumsalz,
A7) Sauer katalysiertes Nonylphenol-Formaldehydharz (Mw 1300 g/mol) mit 2,9 Gew.-% Dodecylbenzolsulfonsäure-N-cocosalkylpropylendiaminammoniumsalz
A8) Alkalisch katalysiertes Dodecylphenol-Formaldehydharz (Mw 1450 g/mol) mit 2,1 Gew.-% 4-Buytlbenzolsulfonsäure-tributylammoniumsalz
A9) Sauer kondensiertes Butylphenol-Formaldehydharz (Mw 1200 g/mol) mit 2,5 Gew.-% p-Toluolsulfonsäure-di(cocosalkyl)ammoniumsalz
A10) Sauer katalysiertes Nonylphenol-Formaldehydharz (Mw 1300 g/mol); (Vergleich)
A11) Sauer katalysiertes Nonylphenol-Formaldehydharz (Mw 1300 g/mol) mit 1,6 Gew.-% Natrium-Dodecylbenzolsulfonat (Vergleich)

Die Mischungen A1) bis A10) wurden als 50 %ige Einstellungen in Solvent Naphtha, einem kommerziellen Gemisch hochsiedender aromatischer Kohlenwasserstoffe eingesetzt.

### Verbesserung der elektrischen Leitfähigkeit von Mitteldestillaten

Für Leitfähigkeitsmessungen wurden die Additive mit der jeweils angegebenen Konzentration in 2 I des Testöls 1 unter Schütteln gelöst. Mit einem automatischen Conductivity Meter wurde darin die elektrische Leitfähigkeit bestimmt. Die Einheit für die elektrische Leitfähigkeit ist Picosiemens/m (pS/m). Für Jet-Fuel wird allgemein eine Leitfähigkeit von mindestens 50 pS/m spezifiziert.

**Tabelle 2: Elektrische Leitfähigkeit von Testöl 1 unter Zusatz von Sulfonsäure-Ammoniumsalzen**

| Beispiel | Additiv | 0 ppm | 1 ppm | 2 ppm | 3 ppm |
|---|---|---|---|---|---|
| 1 (Vgl.) | Didodecylbenzolsulfonsäure-triethanolammoniumsalz | 9 | 12 | 14 | 18 |
| 2 (Vgl.) | Didodecylbenzolsulfonsäure-N-triethylammoniumsalz | 9 | 13 | 18 | 22 |
| 3 (Vgl.) | Didodecylbenzolsulfonsäure-N-cocos-alkylpropylendiamin-ammoniumsalz | 9 | 12 | 16 | 20 |
| 4 (Vgl.) | 4-Buytlbenzolsulfonsäure-tributylammoniumsalz | 9 | 10 | 12 | 16 |
| 5 (Vgl.) | Natrium-Dodecylbenzolsulfonat | 9 | 10 | 10 | 12 |

Die Sulfonsäure-Ammoniumsalze wurde der besseren Vergleichbarkeit halber ebenfalls als 50 %ige Einstellungen in Solvent Naphtha eingesetzt.

**Tabelle 3: Elektrische Leitfähigkeit unter Zusatz erfindungsgemäßer Additive**

| Beispiel | Additiv | 0 ppm | 50 ppm | 100 ppm | 150 ppm |
|---|---|---|---|---|---|
| 6 | A1 | 9 | 56 | 98 | 140 |
| 7 | A5 | 9 | 52 | 95 | 133 |
| 8 | A7 | 9 | 61 | 110 | 161 |
| 9 | A8 | 9 | 49 | 89 | 127 |
| 10 (Vgl.) | A10 | 9 | 20 | 31 | 42 |
| 11 (Vgl.) | A11 | 9 | 23 | 38 | 51 |

### Wirksamkeit der Additive als Kaltfließverbesserer

Zur Beurteilung des Effekts der erfindungsgemäßen Additive auf die Kaltfließeigenschaften von Mitteldestillaten wurden die erfindungsgemäßen Additive (A) mit verschiedenen Coadditiven eingesetzt. Bei den eingesetzten Ethylen-Copolymeren (B) und Paraffindispergatoren (C) handelt es sich um kommerzielle Produkte mit unten angegebenen Charakteristika. Die Produkte wurden als 50 %ige Einstellungen in Kerosin bzw. Solvent Naphtha eingesetzt, sofern nicht anders angegeben.

Die überlegene Wirksamkeit der erfindungsgemäßen Additive zusammen mit Ethylen-Copolymeren und Paraffindispergatoren für Mineralöle und Mineralöldestillate wird zum einen an Hand des CFPP-Tests (Cold Filter Plugging Test nach EN 116) beschrieben.

Des Weiteren wird die Paraffindispergierung in Mitteldestillaten wie folgt im Kurzsedimenttest bestimmt:
150 ml der mit den in der Tabelle angegebenen Additivkomponenten versetzten Mitteldestillate wurden in 200 ml-Messzylindern in einem Kälteschrank mit - 2°C/Stunde auf -13°C abgekühlt und 16 Stunden bei dieser Temperatur gelagert. Anschließend werden visuell Volumen und Aussehen sowohl der sedimentierten Paraffinphase wie auch der darüber stehenden Ölphase bestimmt und beurteilt. Eine geringe Sedimentmenge und eine trübe Ölphase zeigen eine gute Paraffindispergierung.

Zusätzlich werden die unteren 20 Vol.-% isoliert und der Cloud Point gemäß IP 3015 bestimmt. Eine nur geringe Abweichung des Cloud Points der unteren Phase (CP_{KS}) vom Blindwert des Öls zeigt eine gute Paraffindispergierung.

### (B) Charakterisierung der eingesetzten Ethylen-Copolymere

B1 Copolymer aus Ethylen und 13,6 mol-% Vinylacetat mit einer bei 140°C gemessenen Schmelzviskosität von 120 mPas; 65 %ig in Kerosin
B2 Terpolymer aus Ethylen, 13,7 mol-% Vinylacetat und 1,4 mol-% Neodecansäurevinylester mit einer bei 140°C gemessenen Schmelzviskosität von 98 mPas, 65 %ig in Kerosin.
B3 Mischung aus zwei Teilen B1 und einem Teil B2, 65 %ig in Kerosin

### (C) Charakterisierung der eingesetzten Paraffindispergatoren C

C1 Umsetzungsprodukt eines Dodecenyl-Spirobislactons mit einer Mischung aus primärem und sekundärem Talgfettamin, 60 %ig in Solvent Naphtha (hergestellt gemäß EP 0413279)
C2 Umsetzungsprodukt eines Terpolymers aus C₁₄/₁₆-α-Olefin, Maleinsäureanhydrid und Allylpolyglykol mit 2 Equivalenten Ditalgfettamin, 50 %ig in Solvent Naphtha (hergestellt gemäß EP 0606055)
C3 Umsetzungsprodukt aus Phthalsäureanhydrid und 2 Equivalenten Di(hydriertem Talgfett)amin, 50 %ig in Solvent Naphtha (hergestellt gemäß EP 0 061 894)
C4 Umsetzungsprodukt aus Ethylendiamintetraessigsäure mit 4 Equivalenten Ditalgfettamin zum Amid-Ammoniumsalz (hergestellt gemäß EP 0 398 101)

**Tabelle 4: Prüfung als Kaltfließverbesserer in Testöl 2**

| Beispiel | Additive | | | Testöl 2 (CP -5,9°C) | | |
|---|---|---|---|---|---|---|
| | A | B | C | Sediment [Vol.-%] | Aussehen Ölphase | CPKS [°C] |
| 12 (Vgl.) | 50 ppm A10 | 200 ppm B1 | 100 ppm C2 | 5 | klar | 4,2 |
| 13 (Vgl.) | 50 ppm A10 | 400 ppm B1 | 100 ppm C2 | 1 | trüb | -3,2 |
| 14 | 50 ppm A1 | 200 ppm B1 | 100 ppm C2 | 4 | wolkig | 3,0 |
| 15 | 50 ppm A1 | 400 ppm B1 | 100 ppm C2 | 0 | trüb | -4,7 |
| 16 | 50 ppm A2 | 400 ppm B1 | 100 ppm C2 | 0 | trüb | -5,0 |
| 17 | 50 ppm A5 | 400 ppm B1 | 100 ppm C2 | 0 | trüb | -4,1 |
| 18 | 50 ppm A6 | 400 ppm B1 | 100 ppm C2 | 0 | trüb | -4,9 |
| 19 | 50 ppm A7 | 400 ppm B1 | 100 ppm C2 | 0 | trüb | -5,2 |
| 20 | 50 ppm A1 | 200 ppm B2 | 100 ppm C3 | 0 | trüb | -4,3 |
| 21 | 50 ppm A1 | 200 ppm B2 | 100 ppm C4 | 0 | trüb | -4,5 |

**Tabelle 5: Prüfung als Kaltfließverbesserer in Testöl 3**

| Beispiel | Additive | | | Testöl 3 (CP -5,7°C) | | |
|---|---|---|---|---|---|---|
| | A | B | C | Sediment [Vol.-%] | Aussehen Ölphase | CP_{KS} [°C] |
| 22 (Vgl.) | 50 ppm A10 | 200 ppm B1 | 100 ppm C2 | 5 | klar | 4,2 |
| 23 (Vgl.) | 50 ppm A10 | 400 ppm B1 | 100 ppm C2 | 1 | trüb | -3,2 |
| 24 | 50 ppm A1 | 200 ppm B1 | 100 ppm C2 | 4 | wolkig | 3,0 |
| 25 | 50 ppm A1 | 400 ppm B1 | 100 ppm C2 | 0 | trüb | -4,7 |
| 26 | 50 ppm A2 | 400 ppm B1 | 100 ppm C2 | 0 | trüb | -5,0 |
| 27 | 50 ppm A5 | 400 ppm B1 | 100 ppm C2 | 0 | trüb | -4,1 |
| 28 | 50 ppm A6 | 400 ppm B1 | 100 ppm C2 | 0 | trüb | -4,9 |
| 29 | 50 ppm A7 | 400 ppm B1 | 100 ppm C2 | 0 | trüb | -5,2 |
| 30 | 50 ppm A1 | 200 ppm B2 | 100 ppm C3 | 0 | trüb | -4,3 |
| 31 | 50 ppm A1 | 200 ppm B2 | 100 ppm C4 | 0 | trüb | -4,5 |

### Tabelle 6: Prüfung als Kaltfließverbesserer in Testöl 4

Die Bestimmung von CFPP-Wert und Paraffindispergierung im Kurzsedimenttest erfolgte nach Additivierung des Testöls mit 200 ppm Fließverbesserer B3 und 100 ppm Paraffindispergator C2.

| Beispiel | Additiv A | CFPP [°C] | Sediment [Vol.-%] | Aussehen Ölphase | CPKS [°C] |
|---|---|---|---|---|---|
| 32 (Vgl.) | 50 ppm A10 | -24 | 0 | trüb | -2,0 |
| 33 | 50 ppm A1 | -28 | 0 | trüb | -4,4 |
| 34 | 50 ppm A2 | -25 | 0 | trüb | -3,2 |
| 35 | 50 ppm A3 | -30 | 0 | trüb | -3,0 |
| 36 | 50 ppm A4 | -26 | 0 | trüb | -2,9 |
| 37 | 50 ppm A5 | -31 | 0 | trüb | -3,4 |
| 38 | 50 ppm A6 | -24 | 0 | trüb | -3,9 |
| 39 | 50 ppm A7 | -30 | 0 | trüb | -4,4 |
| 40 | 50 ppm A8 | -29 | 0 | trüb | -4,8 |

### Langzeitstabilität der Additive

Die Langzeitstabilität der erfindungsgemäßen Additive wurde an Additiv (A1) direkt nach Herstellung auf seine Performance im Kurzsedimenttest geprüft und mit der Wirkung des gleichen Musters nach fünfwöchiger Lagerung bei 50 °C verglichen. Zum Vergleich wurde ein Alkylphenol-Aldehydharz ohne Zusatz (A0) unter den gleichen Bedingungen geprüft. Dieses war im Gegensatz zum erfindungsgemäßen Additiv nach der Lagerung deutlich dunkler geworden.

Der Kurzsedimenttest wurde in Testöl 4, das 200 ppm B3 und 100 ppm C1 enthielt, mit jeweils 50 ppm des Harzes A10 bzw. A1 durchgeführt.

**Tabelle 7: Kurzsedimenttest in Testöl 4**

| Beispiel | Additiv A | Testöl 4 (CP -7,2°C) | | | |
|---|---|---|---|---|---|
| | | CFPP [°C] | Sediment [Vol.-%] | Aussehen Ölphase | CP_{KS} [°C] |
| 41 (Vgl.) | 50 ppm A10 (sofort) | -24 | 0 | trüb | -2,0 |
| 42 (Vgl.) | 50 ppm A10 (nach 5 Wochen) | -22 | 2 | trüb | 0,2 |
| 43 | 50 ppm A1 (sofort) | -28 | 0 | trüb | -4,4 |
| 44 | 50 ppm A1 (nach 5 Wochen) | -27 | 0 | trüb | -4,5 |
| 45 | 50 ppm A5 (sofort) | -26 | 0 | trüb | -4,8 |
| 46 | 50 ppm A5 (nach 5 Wochen) | -26 | 0 | trüb | -4,6 |

Die Versuche zeigen, dass die erfindungsgemäßen Additive hinsichtlich der Verbesserung der Kaltfließfähigkeit und insbesondere der Paraffindispergierung von Mitteldestillaten den Additiven des Standes der Technik überlegen sind. Darüber hinaus zeigen sie, dass die erfindungsgemäßen Mischungen gleichzeitig einen ausgeprägten synergistischen Effekt hinsichtlich der Verbesserung der elektrischen Leitfähigkeit von Mitteldestillaten aufweisen. Dagegen haben weder Sulfonsäure-Salze alleine noch Alkylphenolharze alleine einen signifikanten Einfluss auf die Leitfähigkeit schwefelarmer Mitteldestillate. Die erfindungsgemäßen Mischungen erlauben es somit, mit nur geringen Mengen Sulfonsäure-Ammoniumsalz die Leitfähigkeit von mit Alkylphenolharzen additivierten Ölen auf mehr als 50 pS/m zu verbessern und damit eine gefahrlose Handhabung der additivierten Öle sicherzustellen.

## Patentansprüche

1. Zusammensetzungen, enthaltend mindestens ein Alkylphenol-Aldehydharz (Bestandteil I) und, bezogen auf das Alkylphenolharz, 0,005 bis 10 Gew.-% mindestens eines öllöslichen, organischen Sulfonsäure-Ammoniumsalzes (Bestandteil II), und worin das Alkylphenol-Aldehydharz eine repetitive Struktureinheit der Formel 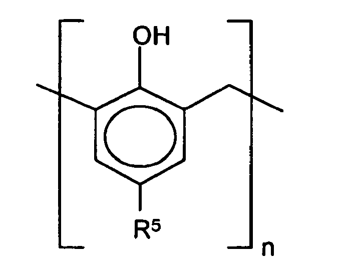 umfasst, worin R⁵ für C₁-C₂₀₀-Alkyl oder -Alkenyl und n für eine Zahl von 2 bis 100 steht.

2. Zusammensetzung nach Anspruch 1, worin der zur Kondensation des Alkylphenol-Aldehydharzes verwendete Aldehyd 1 bis 12 Kohlenstoffatome umfasst.

3. Zusammensetzung nach Anspruch 1 und/oder 2, worin die Alkylgruppe des Alkylphenol-Aldehydharzes 1 bis 200 Kohlenstoffatome umfasst.

4. Zusammensetzung nach einem oder mehreren der Ansprüche 1 bis 3, worin das Molekulargewicht der Alkylphenol-Aldehydharze 400 bis 20.000 g/mol beträgt.

5. Zusammensetzung nach einem oder mehreren der Ansprüche 1 bis 4, worin die zur Herstellung der Sulfonsäure-Ammoniumsalze verwendete Sulfonsäuren öllöslich ist, und mindestens eine Sulfonsäuregruppe und mindestens einen gesättigten oder ungesättigten, linearen, verzweigten und/oder cyclischen Kohlenwasserstoffrest mit 1 bis 40 C-Atomen enthält.

6. Zusammensetzung nach einem oder mehreren der Ansprüche 1 bis 5, worin die zur Herstellung der Sulfonsäure-Ammoniumsalze verwendeten Amine öllösliche, basische Stickstoffverbindungen der allgemeinen Formeln
NR¹R²R³ oder NR¹R²-[(CH2)ₙ-NR²]ₘR³
sind, wobei R¹ für einen Alkylrest mit 1 bis 24 C-Atomen oder einen Alkenylrest mit 2 bis 24 C-Atomen steht, R² und R³ unabhängig voneinander für H oder die Bedeutung von R¹ aufweisen, n für eine Zahl von 2 bis 6 und m für eine Zahl von 1 bis 6 stehen.

7. Zusammensetzung nach einem oder mehreren der Ansprüche 1 bis 6, worin zusätzlich Copolymere aus Ethylen und 6 bis 21 mol-% Vinylester, Acrylester, Methacrylester, Alkylvinylether und/oder Alkene enthalten sind.

8. Zusammensetzung nach einem oder mehreren der Ansprüche 1 bis 7, worin zusätzlich Umsetzungsprodukte von Verbindungen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂-Cycloalkyl oder C₆-C₃₀-Aryl, und n = 2, 3 oder 4 bedeuten, und Y und Z unabhängig voneinander H, C₁-C₃₀-Alkyl oder-(A-O)ₓ-E bedeuten, mit Verbindungen, die eine funktionelle Gruppe der Formel
>C=O
umfassen, enthalten sind.

9. Zusammensetzung nach einem oder mehreren der Ansprüche 1 bis 8, worin zusätzlich Kammpolymere der Formel 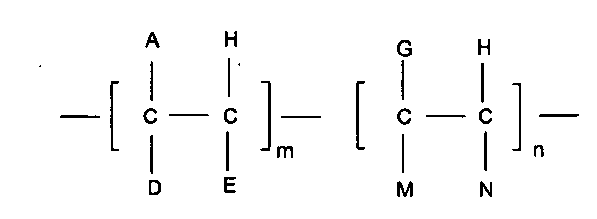 enthalten sind, worin
D A R', COOR', OCOR', R"-COOR', OR'; H, CH₃, A oder R";
E H, A;
G H, R", R"-COOR', einen Arylrest oder einen heterocyclischen Rest;
M H, COOR", OCOR", OR", COOH;
N H, R", COOR", OCOR, einen Arylrest;
R' eine Kohlenwasserstoffkette mit 8 bis 50 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6
bedeuten.

10. Zusammensetzung nach einem oder mehreren der Ansprüche 1 bis 9, worin zusätzlich Polyoxyalkylenverbindungen enthalten sind, die Ester, Ether und Ether/Ester sind, welche mindestens einen Alkylrest mit 12 bis 30 C-Atomen tragen.

11. Zusammensetzung nach einem oder mehreren der Ansprüche 1 bis 10, worin zusätzlich Copolymere enthalten sind, die neben Struktureinheiten von Ethylen Struktureinheiten, die sich von α-Olefinen mit 3 bis 24 C-Atomen ableiten, enthalten, und die Molekulargewichte von bis zu 120.000 g/mol aufweisen.

12. Verfahren zur Herstellung der Zusammensetzungen nach Anspruch 1 durch Kondensation von Alkylphenol und Aldehyd in Gegenwart organischer Sulfonsäuren mit mindestens einer Sulfonsäuregruppe und mindestens einem gesättigten oder ungesättigten, linearen, verzweigten und/oder cyclischen Kohlenwasserstoffrest mit 1 bis 40 C-Atomen und anschließender Neutralisation der Sulfonsäure mit Aminen der allgemeinen Formeln
NR¹R²R³ oder NR¹R²-[(CH2)ₙ-NR²]_{mR}³,
wobei R¹ für einen Alkylrest mit 1 bis 24 C-Atomen oder einen Alkenylrest mit 2 bis 24 C-Atomen steht, R² und R³ unabhängig voneinander für H oder die Bedeutung von R¹ aufweisen, n für eine Zahl von 2 bis 6 und m für eine Zahl von 1 bis 6 stehen.

13. Verfahren zur Herstellung der Zusammensetzungen nach Anspruch 1 durch Kondensation von Alkylphenol und Aldehyd in Gegenwart von Aminen der allgemeinen Formeln
NR¹R²R³ oder NR¹R²-[(CH2)ₙ-NR²]ₘR³,
wobei R¹ für einen Alkylrest mit 1 bis 24 C-Atomen oder einen Alkenylrest mit 2 bis 24 C-Atomen steht, R² und R³ unabhängig voneinander für H oder die Bedeutung von R¹ aufweisen, n für eine Zahl von 2 bis 6 und m für eine Zahl von 1 bis 6 stehen, und anschließende Neutralisation des Amins mit öllöslichen Sulfonsäuren mit mindestens einer Sulfonsäuregruppe und mindestens einem gesättigten oder ungesättigten, linearen, verzweigten und/oder cyclischen Kohlenwasserstoffrest mit 1 bis 40 C-Atomen.

14. Mineralöldestillate mit einem Schwefelgehalt von 350 ppm oder weniger, die 5 bis 500 ppm mindestens eines Alkylphenol-Aldehydharzes (Bestandteil I) und 0,001 bis 10 ppm mindestens eines öllöslichen, organischen Sulfonsäure-Ammoniumsalzes (Bestandteil II) enthalten, und worin das Alkylphenol-Aldehydharz eine repetitive Struktureinheit der Formel 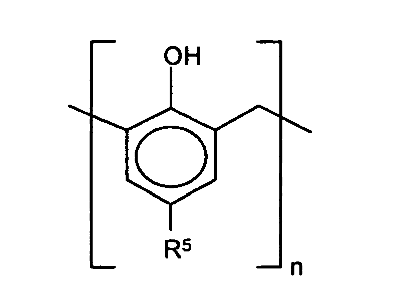 umfasst, worin R⁵ für C₁-C₂₀₀-Alkyl oder -Alkenyl und n für eine Zahl von 2 bis 100 steht.

15. Verwendung von Zusammensetzungen, die mindestens ein Alkylphenol-Aldehydharz und, bezogen auf dieses Alkylphenol-Aldehydharz oder diese Alkylphenol-Aldehydharze, 0,005 bis 10 Gew.-% mindestens eines öllöslichen, organischen Sulfonsäure-Ammoniumsalzes enthalten, zur Verbesserung der elektrischen Leitfähigkeit von Mitteldestillaten mit einem Schwefelgehalt von 350 ppm oder weniger, und worin das Alkylphenol-Aldehydharz eine repetitive Struktureinheit der Formel 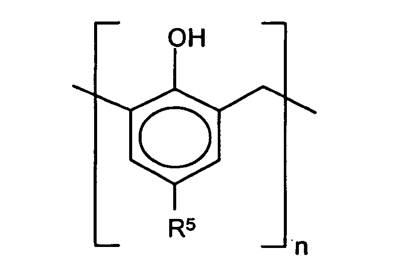 umfasst, worin R⁵ für C₁-C₂₀₀-Alkyl oder -Alkenyl und n für eine Zahl von 2 bis 100 steht.

16. Verwendung von Zusammensetzungen, die mindestens ein Alkylphenol-Aldehydharz und, bezogen auf dieses Alkylphenol-Aldehydharz oder diese Alkylphenol-Aldehydharze, 0,005 bis 10 Gew.-% mindestens eines öllöslichen, organischen Sulfonsäure-Ammoniumsalzes enthalten, zur Verbesserung der Kaltfließfähigkeit von Mitteldestillaten mit einem Schwefelgehalt von 350 ppm oder weniger, und worin das Alkylphenol-Aldehydharz eine repetitive Struktureinheit der Formel 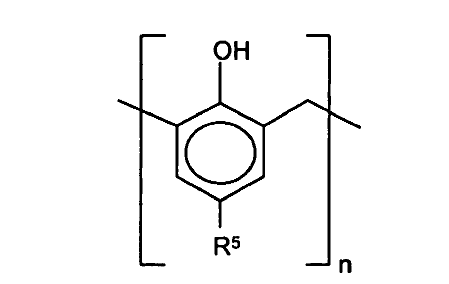 umfasst, worin R⁵ für C₁-C₂₀₀-Alkyl oder -Alkenyl und n für eine Zahl von 2 bis 100 steht.

## Claims

1. A composition comprising at least one alkylphenol-aldehyde resin (constituent I) and, based on the alkylphenol resin, from 0.005 to 10% by weight of at least one oil-soluble organic ammonium sulfonate (constituent II), and wherein the alkylphenol-aldehyde resin has a repeating structural unit of the formula 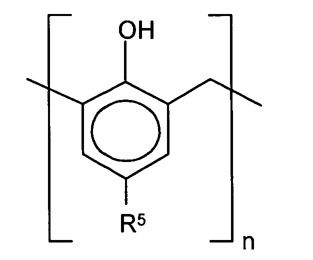 where R⁵ is C₁-C₂₀₀-alkyl or -alkenyl and n is from 2 to 100.

2. The composition as claimed in claim 1, wherein the aldehyde used for the condensation of the alkylphenol-aldehyde resin has from 1 to 12 carbon atoms.

3. The composition as claimed in claim 1 and/or 2, wherein the alkyl group of the alkylphenol-aldehyde resin has from 1 to 200 carbon atoms.

4. The composition as claimed in one or more of claims 1 to 3, wherein the molecular weight of the alkylphenol-aldehyde resins is from 400 to 20 000 g/mol.

5. The composition as claimed in one or more of claims 1 to 4, wherein the sulfonic acids used to prepare the ammonium sulfonates are oil-soluble, and contain at least one sulfonic acid group and at least one saturated or unsaturated, linear, branched and/or cyclic hydrocarbon radical having from 1 to 40 carbon atoms.

6. The composition as claimed in one or more of claims 1 to 5, wherein the amines used to prepare the ammonium sulfonates are oil-soluble basic nitrogen compounds of the general formulae
NR¹R²R³ or NR¹R²-[(CH2)ₙ-N_{R}²]ₘR³
where R¹ is an alkyl radical having from 1 to 24 carbon atoms or an alkenyl radical having from 2 to 24 carbon atoms, R² and R³ are each independently H or as defined for R¹, n is from 2 to 6 and m is from 1 to 6.

7. The composition as claimed in one or more of claims 1 to 6, wherein copolymers of ethylene and from 6 to 21 mol% of vinyl esters, acrylic esters, methacrylic esters, alkyl vinyl ethers and/or alkenes are additionally present.

8. The composition as claimed in one or more of claims 1 to 7, wherein reaction products of compounds of the formula NR⁶R⁷R⁸, where R⁶, R⁷ and R⁸ may be the same or different and at least one of these groups is C₈-C₃₆-alkyl, C₆-C₃₆-cycloalkyl, C₈-C₃₆-alkenyl, in particular C₁₂-C₂₄-alkyl, C₁₂-C₂₄-alkenyl or cyclohexyl, and the remaining groups are either hydrogen, C₁-C₃₆-alkyl, C₂-C₃₆-alkenyl, cyclohexyl, or a group of the formulae -(A-O)ₓ-E or -(CH₂)ₙ-NYZ, where A is an ethyl or propyl group, x is from 1 to 50, E = H, C₁-C₃₀-alkyl, C₅-C₁₂-cycloalkyl or C₆-C₃₀-aryl, and n = 2, 3 or 4, and Y and Z are each independently H, C₁-C₃₀-alkyl or -(A-O)ₓ-E with compounds which have a functional group of the formula
>C=O
are additionally present.

9. The composition as claimed in one or more of claims 1 to 8, wherein comb polymers of the formula 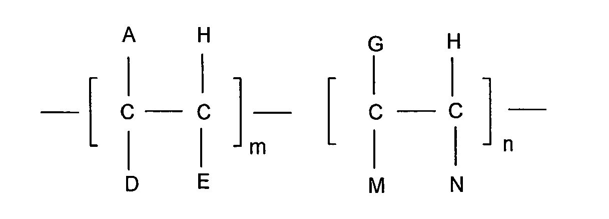 are additionally present, where
A is R', COOR', OCOR', R"-COOR', OR';
D is H, CH₃, A or R";
E is H, A;
G is H, R", R"-COOR', an aryl radical or a heterocyclic radical;
M is H, COOR", OCOR", OR", COOH;
N is H, R", COOR", OCOR, an aryl radical;
R' is a hydrocarbon chain having from 8 to 50 carbon atoms;
R" is a hydrocarbon chain having from 1 to 10 carbon atoms;
m is between 0.4 and 1.0; and
n is between 0 and 0.6.

10. The composition as claimed in one or more of claims 1 to 9, wherein polyoxyalkylene compounds which are esters, ethers and ether/esters and bear at least one alkyl radical having from 12 to 30 carbon atoms are additionally present.

11. The composition as claimed in one or more of claims 1 to 10, wherein copolymers which contain, in addition to structural units of ethylene, structural units which derive from α-olefins having from 3 to 24 carbon atoms and have molecular weights of up to 120 000 g/mol are additionally present.

12. A process for preparing compositions as claimed in claim 1 by condensing alkylphenol and aldehyde in the presence of organic sulfonic acids having at least one sulfonic acid group and at least one saturated or unsaturated, linear, branched and/or cyclic hydrocarbon radical having from 1 to 40 carbon atoms and subsequently neutralizing the sulfonic acid with amines of the general formulae
NR¹R²R³ or NR¹R²-[(CH₂)ₙ-NR²]ₘR³,
where R¹ is an alkyl radical having from 1 to 24 carbon atoms or an alkenyl radical having from 2 to 24 carbon atoms, R² and R³ are each independently H or as defined for R¹, n is from 2 to 6 and m is from 1 to 6.

13. A process for preparing the compositions as claimed in claim 1 by condensing alkylphenol and aldehyde in the presence of amines of the general formulae
NR¹R²R³ or NR¹R²-[(CH₂)ₙ-NR²]ₘR³,
where R¹ is an alkyl radical having from 1 to 24 carbon atoms or an alkenyl radical having from 2 to 24 carbon atoms, R² and R³ are each independently H or as defined for R¹, n is from 2 to 6 and m is from 1 to 6, and subsequently neutralizing the amine with oil-soluble sulfonic acids having at least one sulfonic acid group and at least one saturated or unsaturated, linear, branched and/or cyclic hydrocarbon radical having from 1 to 40 carbon atoms.

14. A mineral oil distillate having a sulfur content of 350 ppm or less, which contains from 5 to 500 ppm of at least one alkylphenol-aldehyde resin (constituent I) and from 0.001 to 10 ppm of at least one oil-soluble organic ammonium sulfonate (constituent II), and wherein the alkylphenol-aldehyde resin has a repeating structural unit of the formula 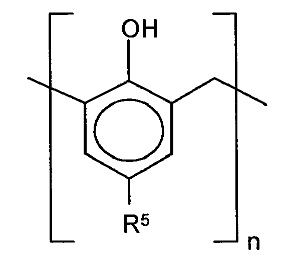 where R⁵ is C₁-C₂₀₀-alkyl or -alkenyl and n is from 2 to 100.

15. The use of compositions which comprise at least one alkylphenol-aldehyde resin and, based on this alkylphenol-aldehyde resin or these alkylphenol-aldehyde resins, contain from 0.005 to 10% by weight of at least one oil-soluble organic ammonium sulfonate to improve the electrical conductivity of middle distillates having a sulfur content of 350 ppm or less, and wherein the alkylphenol-aldehyde resin has a repeating structural unit of the formula 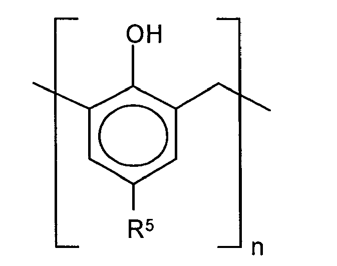 where R⁵ is C₁-C₂₀₀-alkyl or -alkenyl and n is from 2 to 100.

16. The use of compositions which comprise at least one alkylphenol-aldehyde resin and, based on this alkylphenol-aldehyde resin or these alkylphenol-aldehyde resins, contain from 0.005 to 10% by weight of at least one oil-soluble organic ammonium sulfonate to improve the cold flowability of middle distillates having a sulfur content of 350 ppm or less, and wherein the alkylphenol-aldehyde resin has a repeating structural unit of the formula 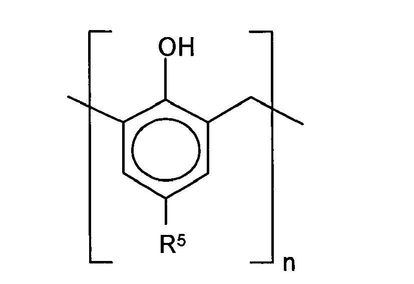 where R⁵ is C₁-C₂₀₀-alkyl or -alkenyl and n is from 2 to 100.

## Revendications

1. Compositions, contenant au moins une résine d'alkylphénol-aldéhyde (composant I) et, par rapport à la résine d'alkylphénol, de 0,005 à 10 % en poids d'au moins un sel d'ammonium d'acide sulfonique organique, liposoluble (composant II), et dans lesquelles la résine d'alkylphénol-aldéhyde comprend un motif structural répétitif de formule 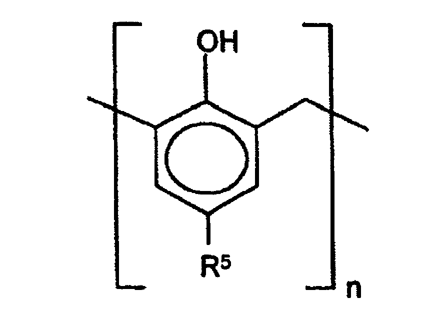 dans laquelle R⁵ représente un groupe alkyle ou alcényle en C₁-C₂₀₀ et n représente un nombre valant de 2 à 100.

2. Composition selon la revendication 1, dans laquelle l'aldéhyde utilisé pour la condensation de la résine d'alkylphénol-aldéhyde comprend de 1 à 12 atomes de carbone.

3. Composition selon la revendication 1 et/ou la revendication 2, dans laquelle le groupe alkyle de la résine d'alkylphénol-aldéhyde comprend de 1 à 200 atomes de carbone.

4. Composition selon une ou plusieurs des revendications 1 à 3, dans laquelle la masse moléculaire de la résine d'alkylphénol-aldéhyde vaut de 400 à 20 000 g/mole.

5. Composition selon une ou plusieurs des revendications 1 à 4, dans laquelle les acides sulfoniques utilisés pour la préparation des sels d'ammonium d'acides sulfoniques sont liposolubles et contiennent au moins un groupe sulfo et au moins un radical hydrocarboné linéaire, ramifié et/ou cyclique, saturé ou insaturé, ayant de 1 à 40 atomes de carbone.

6. Composition selon une ou plusieurs des revendications 1 à 5, dans laquelle les amines utilisées pour la préparation des sels d'ammonium d'acides sulfoniques sont des composés azotés basiques, liposolubles, de formules générales
NR¹R²R³ ou NR¹R²- [(CH₂)ₙ-NR²]ₘR³
dans lesquelles R¹ représente un radical alkyle ayant de 1 à 24 atomes de carbone ou un radical alcényle ayant de 2 à 24 atomes de carbone, R² et R³, indépendamment l'un de l'autre, représentent H ou ont la signification de R¹, n représente un nombre valant de 2 à 6 et m représente un nombre valant de 1 à 6.

7. Composition selon une ou plusieurs des revendications 1 à 6, dans laquelle sont en outre contenus des copolymères d'éthylène et de 6 à 21 % en moles d'esters vinyliques, d'esters acryliques, d'esters méthacryliques, d'éthers alkylvinyliques et/ou d'alcènes.

8. Composition selon une ou plusieurs des revendications 1 à 7, dans laquelle sont en outre contenus des produits de réaction de composés de formule NR⁶R⁷R⁸, dans laquelle R⁶, R⁷ et R⁸ peuvent être identiques ou différents, et au moins l'un de ces groupes représente un groupe alkyle en C₈-C₃₆, cycloalkyle en C₆-C₃₆, alcényle en C₈-C₃₆, en particulier alkyle en C₁₂-C₂₄, alcényle en C₁₂-C₂₄ ou cyclohexyle, et les autres groupes représentent soit un atome d'hydrogène, un groupe alkyle en C₁-C₃₆, alcényle en C₂-C₃₆, cyclohexyle, soit un groupe de formules -(A-O)ₓ-E ou -(CH₂)ₙ-NYZ, où A représente un groupe éthyle ou propyle, x représente un nombre valant de 1 à 50, E = H, alkyle en C₁-C₃₀, cycloalkyle en C₅-C₁₂ ou aryle en C₆-C₃₀, et n = 2, 3 ou 4, et Y et Z représentent, indépendamment l'un de l'autre, H, un groupe alkyle en C₁-C₃₀ ou -(A-O)ₓ-E, avec des composés qui comprennent un groupe fonctionnel de formule
>C=O.

9. Composition selon une ou plusieurs des revendications 1 à 8, dans laquelle sont en outre contenus des polymères à structure en peigne de formule 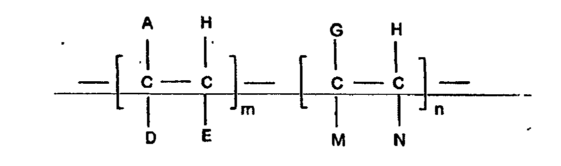 dans laquelle
A représente R', COOR', OCOR', R"-COOR' , OR' ;
D représente H, CH₃, A ou R" ;
E représente H, A ;
G représente H, R", R" -COOR' , un radical aryle ou un radical hétérocyclique ;
M représente H, COOR", OCOR", OR", COOH ;
N représente H, R" , COOR", OCOR, un radical aryle ;
R' représente une chaîne hydrocarbonée ayant de 8 à 50 atomes de carbone ;
R" représente une chaîne hydrocarbonée ayant de 1 à 10 atomes de carbone ;
m représente un nombre compris entre 0,4 et 1,0 ; et
n représente un nombre compris entre 0 et 0,6.

10. Composition selon une ou plusieurs des revendications 1 à 9, dans laquelle sont en outre contenus des composés polyoxyalkylène, qui sont des esters, des éthers et des éther/esters, qui portent au moins un radical alkyle ayant de 12 à 30 atomes de carbone.

11. Composition selon une ou plusieurs des revendications 1 à 10, dans laquelle sont en outre contenus des copolymères qui, en plus de motifs structuraux d'éthylène, contiennent des motifs structuraux qui dérivent d'α-oléfines ayant de 3 à 24 atomes de carbone, et qui présentent des masses moléculaires allant jusqu'à 120 000 g/mole.

12. Procédé pour la préparation des compositions selon la revendication 1, par condensation d'alkylphénol et d'aldéhyde en présence d'acides sulfoniques organiques comportant au moins un groupe sulfo et au moins un radical hydrocarboné linéaire, ramifié et/ou cyclique, saturé ou insaturé, ayant de 1 à 40 atomes de carbone, et neutralisation subséquente de l'acide sulfonique par des amines de formules générales
NR¹R²R ³ ou NR¹R²- [(CH₂)ₙ-NR²]ₘR³,
dans lesquelles R¹ représente un radical alkyle ayant de 1 à 24 atomes de carbone ou un radical alcényle ayant de 2 à 24 atomes de carbone, R² et R³, indépendamment l'un de l'autre, représentent H ou ont la signification de R¹, n représente un nombre valant de 2 à 6 et m représente un nombre valant de 1 à 6.

13. Procédé pour la préparation des compositions selon la revendication 1, par condensation d'alkylphénol et d'aldéhyde en présence d'amines de formules générales
NR¹R²R³ ou NR¹R²- [(CH₂)ₙ-NR²]ₘR³,
dans lesquelles R¹ représente un radical alkyle ayant de 1 à 24 atomes de carbone ou un radical alcényle ayant de 2 à 24 atomes de carbone, R² et R³, indépendamment l'un de l'autre, représentent H ou ont la signification de R¹, n représente un nombre valant de 2 à 6 et m représente un nombre valant de 1 à 6, et neutralisation subséquente de l'amine par des acides sulfoniques liposolubles comportant au moins un groupe sulfo et au moins un radical hydrocarboné linéaire, ramifié et/ou cyclique, saturé ou insaturé, ayant de 1 à 40 atomes de carbone.

14. Distillats d'huiles minérales ayant une teneur en soufre de 350 ppm ou moins, qui contiennent de 5 à 500 ppm d'au moins une résine d'alkylphénol-aldéhyde (composant I) et de 0,001 à 10 ppm d'au moins un sel d'ammonium d'acide sulfonique organique, liposoluble (composant II), et dans lesquels la résine d'alkylphénol-aldéhyde comprend un motif structural répétitif de formule 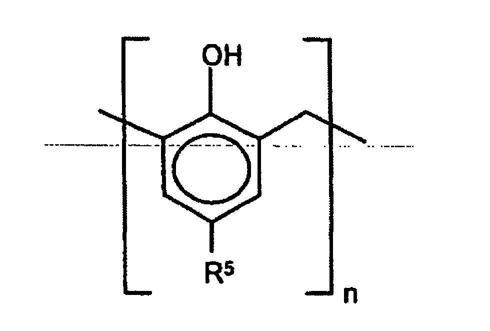 dans laquelle R⁵ représente un groupe alkyle ou alcényle en C₁-C₂₀₀ et n représente un nombre valant de 2 à 100.

15. Utilisation de compositions qui contiennent au moins une résine d'alkylphénol-aldéhyde et, par rapport à cette résine d'alkylphénol-aldéhyde ou à ces résines d'alkylphénol-aldéhyde, de 0,005 à 10 % en poids d'au moins un sel d'ammonium d'acide sulfonique organique, liposoluble, pour l'amélioration de la conductibilité électrique de distillats moyens ayant une teneur en soufre de 350 ppm ou moins, et dans lesquelles la résine d'alkylphénol-aldéhyde comprend un motif structural répétitif de formule 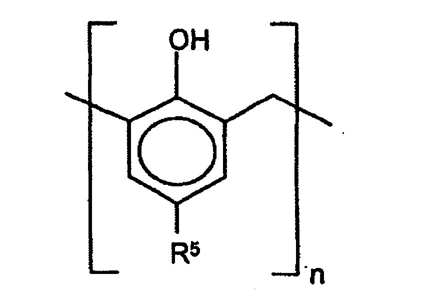 dans laquelle R⁵ représente un groupe alkyle ou alcényle en C₁-C₂₀₀ et n représente un nombre valant de 2 à 100.

16. Utilisation de compositions qui contiennent au moins une résine d'alkylphénol-aldéhyde et, par rapport à cette résine d'alkylphénol-aldéhyde ou à ces résines d'alkylphénol-aldéhyde, de 0,005 à 10 % en poids d'au moins un sel d'ammonium d'acide sulfonique organique, liposoluble, pour l'amélioration de la fluidité à froid de distillats moyens ayant une teneur en soufre de 350 ppm ou moins, et dans lesquelles la résine d'alkylphénol-aldéhyde comprend un motif structural répétitif de formule 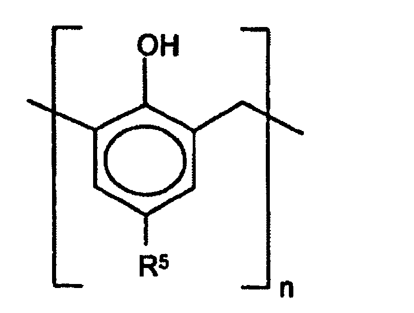 dans laquelle R⁵ représente un groupe alkyle ou alcényle en C₁-C₂₀₀ et n représente un nombre valant de 2 à 100.
